# EUROPÄISCHE PATENTSCHRIFT

(11) **EP 2 423 023 B1**
(45) Veröffentlichungstag und Bekanntmachung des Hinweises auf die Patenterteilung: **14.01.2015**
(21) Anmeldenummer: 11179085.3
(22) Anmeldetag: 26.08.2011
(51) Int. Cl.: B60J 10/00, B60J 10/08

(54) **Dichtung und Dichtungsanordnung für ein Kraftfahrzeug, insbesondere zum Abdichten einer Karosserie**
Seal and seal assembly for a motor vehicle, in particular for sealing a bodywork
Joint et agencement de joint pour un véhicule automobile, notamment pour l'étanchéification d'une carrosserie

(30) Priorität: 27.08.2010 DE 102010035588
(43) Veröffentlichungstag der Anmeldung: 29.02.2012
(73) Patentinhaber: Cooper Standard GmbH, 88131 Lindau (DE)
(72) Erfinder: Krause, Fritz, 88145 Hergatz (DE)
(74) Vertreter: Flügel Preissner Kastel Schober

(56) Entgegenhaltungen:
- EP-A1- 1 288 049
- DE-A1-102006 060 391
- DE-B3-102009 008 106
- US-A1- 2001 025 454

## Beschreibung

Die Erfindung betrifft eine Dichtungsanordnung für ein Kraftfahrzeug, insbesondere zum Abdichten einer Karosserie. Die Dichtungsanordnung umfasst eine sich in Längsrichtung erstreckende Dichtung und einen Flansch mit einem inneren Rahmenteil und einem äußeren Rahmenteil. Die Dichtung umfasst wenigstens einen Dichtungsabschnitt und einen Befestigungsabschnitt. Der Befestigungsabschnitt weist wenigstens einen Stützabschnitt und wenigstens einen Fixierungsabschnitt auf. Der Flansch weist wenigstens einen Stützbereich zur Aufnahme des Stützabschnitts und wenigstens einen Fixierungsbereich zur Aufnahme des Fixierungsabschnitts auf. Der Stützabschnitt und der Fixierungsabschnitt sowie der Stützbereich und der Fixierungsbereich sind jeweils in Längsrichtung hintereinander angeordnet. Die Erfindung betrifft ferner eine in einer solchen Dichtungsanordnung verwendete Dichtung.

Eine Dichtungsanordnung zum Abdichten der Karosserie eines Kraftfahrzeugs ist aus DE 10 2006 060 391 A1 bekannt. Die Dichtungsanordnung ist mit einem Flansch und einer Dichtung, die einen Dichtungsabschnitt und einen Befestigungsabschnitt aufweist, versehen. Der Befestigungsabschnitt ist mittels eines Befestigungsmittels an einem äußeren Rahmenteil des Flansches befestigbar. Das Befestigungsmittel kann ein Klebeband, ein Klebstoff, ein Clip oder eine Klammer sein.

Eine weitere Dichtungsanordnung wird in DE 100 47 818 A1 beschrieben. Die Dichtungsanordnung weist einen Befestigungsabschnitt auf, der durch ein im Querschnitt U-förmiges Kederprofil gebildet wird. Das Kederprofil ist kraftschlüssig auf einen Flansch gesteckt. Um einen zuverlässigen Kraftschluss zu erreichen, ist das Kederprofil durch einen metallenen Verstärkungsträger armiert und weist Haltelippen auf, die an dem Flansch anliegen. Die Dichtungsanordnung dient darüber hinaus dazu, den Rand einer Innenverkleidung des Kraftfahrzeugs, den sogenannten Fahrzeughimmel, aufzunehmen, und ist zu diesem Zweck mit einer Nut versehen, in die der Rand des Fahrzeughimmels eingepresst ist.

Aus DE 10 2009 008 106 B3 ist eine weitere Dichtung für ein Kraftfahrzeug bekannt. Die Dichtung ist mittels eines Fixierungselements an einem Flansch eines Kraftfahrzeugs befestigbar. Hierzu weist der Flansch eine hinterschnittene Aussparung auf, die einen verjüngten Bereich und einen Aufnahmebereich umfasst. Das Fixierungselement umfasst eine erste Seitenwange, eine zweite Seitenwange und einen Verbindungssteg, der die erste Seitenwange und die zweite Seitenwange miteinander verbindet. Der Verbindungssteg ist elastisch verformbar ausgestaltet, um durch eine Verformung den verjüngten Bereich passieren zu können und in den Aufnahmebereich der Aussparung des Flansches zu gelangen, wobei der Verbindungssteg hinterschneidend in den Aufnahmebereich der Aussparung eingreift.

US 2001/0025454 A1 offenbart eine Fensterschachtdichtung, die in ausgestanzten Bereichen einer Karosserie eines Kraftfahrzeugs kraftschlüssig festgehalten ist. Die Dichtung umfasst einen Dichtungsabschnitt und einen Befestigungsabschnitt. Der Befestigungsabschnitt umfasst wenigstens einen Stützabschnitt, der sich an einem Stützbereich eines Flanschs abstützt, und einen Fixierungsabschnitt, der an einem Fixierungsbereich des Flanschs befestigbar ist. Der Stützabschnitt und der Fixierungsabschnitt sind in Längsrichtung hintereinander angeordnet und weisen unterschiedliche Querschnitte auf, da sie aus unterschiedlichen, extrudierten Bereichen der Dichtung durch Zuschneiden gebildet sind.

Der Erfindung liegt die **Aufgabe** zugrunde, eine Dichtungsanordnung vorzuschlagen, die in einfacher und sicherer Weise festlegbar ist, besonders leichtgewichtig ist und kostengünstig herzustellen ist.

Zur **Lösung** dieser Aufgabe wird eine Dichtung gemäß Anspruch 1 und eine Dichtungsanordnung gemäß Anspruch 8 vorgeschlagen.

Vorteilhafte Ausgestaltungen der Erfindung sind in den Ansprüchen 2 bis 7 und 9 bis 14 beschrieben.

Die erfindungsgemäße Dichtung ist an einem Flansch, der ein inneres Rahmenteil und ein äußeres Rahmenteil aufweist, befestigbar, und umfasst wenigstens einen Dichtungsabschnitt und einen Befestigungsabschnitt, wobei der Befestigungsabschnitt wenigstens einen Stützabschnitt, der sich an einem Stützbereich des Flansches abstützt, und wenigstens einen Fixierungsabschnitt, der an einem Fixierungsbereich des Flansches befestigbar ist, aufweist, und wobei der Stützabschnitt und der Fixierungsabschnitt in Längsrichtung hintereinander angeordnet sind.

Die erfindungsgemäße Dichtungsanordnung umfasst eine sich in Längsrichtung erstreckende erfindungsgemäße Dichtung und einen Flansch mit einem inneren Rahmenteil und einem äußeren Rahmenteil, wobei der Flansch wenigstens einen Stützbereich zur Aufnahme des Stützabschnitts der Dichtung und wenigstens einen Fixierungsbereich zur Aufnahme des Fixierungsabschnitts der Dichtung aufweist. Der Stützbereich und der Fixierungsbereich sind in Längsrichtung hintereinander angeordnet.

Die erfindungsgemäße Dichtungsanordnung bietet den Vorteil, dass die Dichtung in einfacher und sicherer Weise ohne den Einsatz eines Kederprofils an dem Flansch festlegbar ist und dass auf eine Armierung oder einen Carrier sowie auf den Einsatz eines Klebebandes verzichtet werden kann, womit Kosten bei der Herstellung gespart werden und das Gewicht der Dichtungsanordnung reduziert ist. Weiterhin wird durch den Verzicht auf den Einsatz eines Carriers die Wiederverwertung beziehungsweise das Recyclen der Dichtung erleichtert.

In einer bevorzugten Ausgestaltung ist die Dichtung durch eine Vielzahl an Stützabschnitten und Fixierungsabschnitten gekennzeichnet, die in Längsrichtung alternierend angeordnet sind. Somit ist eine sichere und zuverlässige Befestigung der Dichtung an dem Flansch des Kraftfahrzeugs gewährleistet.

In einer weiteren bevorzugten Ausgestaltung der Dichtung weist der Fixierungsbereich eine Öffnung auf, die durch das innere Rahmenteil und das äußere Rahmenteil gebildet ist, wobei vorzugsweise der Fixierungsabschnitt in dem Fixierungsbereich beziehungsweise der Öffnung aufgenommen ist, und zwar vorzugsweise formschlüssig. Dadurch verleiht die Öffnung des Fixierungsbereichs ausreichend Stabilität für die erfindungsgemäße Dichtung und auf den Einsatz eines Kederprofils mit einer Armierung oder einem Carrier, beziehungsweise auf den Einsatz eines Clips, einer Klammer, eines Klebestreifens oder eines Klebstoffs kann durch diese Ausgestaltung verzichtet werden. So entstehen bei der Herstellung und beim Einbau der erfindungsgemäßen Dichtung substantiell weniger Kosten.

Bevorzugterweise sind die Stützabschnitte und/oder die Fixierungsabschnitte in Längsrichtung durch einen Zwischenraum voneinander getrennt. Dieser Zwischenraum unterteilt den Befestigungsabschnitt in Stützabschnitte und Fixierungsabschnitte. Der Zwischenraum ermöglicht es, dass das äußere Rahmenteil durch ihn hindurch verläuft, wodurch auch eine Unterteilung des Flansches in Stützbereiche und Fixierungsbereiche ermöglicht wird. Der Zwischenraum kann durch eine variable Extrusion der Dichtung hergestellt sein. Alternativ kann der Befestigungsabschnitt nach der Extrusion der Dichtung noch durchgängig ausgebildet sein, so dass die Zwischenräume nachträglich eingefügt werden müssen. Dies kann insbesondere durch Fräsen, Sägen, Schneiden, Stanzen oder Herausbrechen geschehen. Bevorzugterweise ist die erfindungsgemäße Dichtung durch einen ersten Dichtungsabschnitt gekennzeichnet, der wenigstens eine Hohlkammer aufweist und der geeignet ist, die Karosserie gegenüber einer Tür abzudichten. Die Hohlkammer ermöglicht, dass sich der Dichtungsabschnitt vorteilhaft an die Kontur der Tür in geschlossenem Zustand anpassen kann. Weiterhin vorzugsweise ist die Dichtung durch einen zweiten Dichtungsabschnitt gekennzeichnet, der wenigstens eine Dichtlippe aufweist und vorzugsweise zum Abdichten der Karosserie gegenüber einer Fahrzeuginnenverkleidung dient. Mit dem Begriff Fahrzeuginnenverkleidung kann insbesondere auch ein Fahrzeughimmel bezeichnet sein. Der zweite Dichtungsabschnitt gewährleistet darüber hinaus eine wirksame Kaschierung des Flansches.

Weiterhin vorzugsweise ist die erfindungsgemäße Dichtung durch eine Ausnehmung gekennzeichnet, die abschnittsweise zur Aufnahme des inneren Rahmenteils oder des äußeren Rahmenteils dient und zwischen Befestigungsabschnitt und Dichtungsabschnitt angeordnet ist.

In einer weiteren bevorzugten Ausgestaltung weist der Fixierungsabschnitt wenigstens eine Haltelippe auf, die dafür geeignet ist, den Fixierungsabschnitt in der Öffnung zu halten. Die Haltelippen erschweren das Herausziehen des Fixierungsabschnitts aus der Öffnung, so dass ein sicherer Halt der Dichtung am Flansch gewährleistet ist.

Weiterhin vorzugsweise weist der Fixierungsabschnitt und der Stützabschnitt in Längsrichtung einen annähernd gleichbleibenden Querschnitt auf. Somit kann die Dichtung auf einfache Weise durch Extrusion hergestellt sein und kein Anspritzen der Fixierungsabschnitte oder Stützabschnitte ist erforderlich. In einer bevorzugten Ausgestaltung ist die Dichtungsanordnung durch eine Vielzahl an Stützbereichen und Fixierungsbereichen gekennzeichnet, die in Längsrichtung alternierend angeordnet sind. Dadurch ist die Dichtung mit alternierend angeordneten Stützabschnitten und Fixierungsabschnitten an dem Flansch befestigbar. Somit ist auch eine hinreichende Fixierung und Abstützung der Dichtung an dem Flansch gewährleistet.

In einer weiterhin bevorzugten Ausgestaltung der Dichtungsanordnung weist der Fixierungsbereich eine Öffnung auf, die durch das innere Rahmenteil und das äußere Rahmenteil gebildet ist, wobei vorzugsweise der Fixierungsabschnitt in dem Fixierungsbereich aufgenommen ist, und zwar vorzugsweise formschlüssig.

In einer bevorzugten Ausgestaltung der Dichtungsanordnung weist der Befestigungsabschnitt eine Innenseite und eine Außenseite auf, wobei entlang des Stützbereichs das innere Rahmenteil und das äußere Rahmenteil an der Innenseite verlaufen, und vorzugsweise entlang des Fixierungsbereichs das innere Rahmenteil an der Innenseite und das äußere Rahmenteil an der Außenseite verläuft. Durch diese Ausgestaltung kann das äußere Rahmenteil durchgängig ausgebildet sein und zudem gleichermaßen den Stützbereich und den Fixierungsbereich bilden. Weiterhin ermöglicht diese Ausgestaltung, dass das innere Rahmenteil und das äußere Rahmenteil entlang der Stützbereiche angrenzend aneinander in Längsrichtung verlaufen, und somit, beispielsweise durch Punktschweißen, das innere Rahmenteil mit dem äußeren Rahmenteil verbunden werden kann.

In einer weiteren bevorzugten Ausgestaltung der Dichtungsanordnung verläuft das äußere Rahmenteil wenigstens durch einen Zwischenraum hindurch. Diese Ausgestaltung ermöglicht es, dass das äußere Rahmenteil kontinuierlich ausgestaltet sein kann. Bevorzugterweise verläuft das innere Rahmenteil in Längsrichtung im Wesentlichen geradlinig und vorzugsweise verläuft das äußere Rahmenteil in Längsrichtung im Wesentlichen spundwandförmig.

Weiterhin vorzugsweise verlaufen das innere Rahmenteil und das äußere Rahmenteil abschnittsweise parallel zueinander in Längsrichtung.

In einer weiteren Ausgestaltung der Dichtungsanordnung weist das äußere Rahmenteil einen Randbereich auf, der zumindest im Fixierungsbereich vom inneren Rahmenteil wegragt und vorzugsweise in der Ausnehmung aufgenommen ist. Durch diese Ausgestaltung wird ein Zentrieren des Fixierungsabschnitts an der nun trichterförmig ausgestalteten Öffnung des Fixierungsbereich erleichtert und somit eine einfachere Befestigung der Dichtung am Flansch ermöglicht.

Nachfolgend wird die Erfindung anhand zweier Ausführungsbeispiele näher beschrieben, die in den Zeichnungen in schematischer Weise dargestellt sind. Hierbei zeigen:
- Fig. 1: eine schematische, perspektivische Ansicht eines Fahrzeugs mit einer erfindungsgemäßen Dichtungsanordnung;
- Fig. 2: einen Schnitt längs der Linie II-II in Fig. 1, der die erfindungsgemäße Dichtungsanordnung zeigt;
- Fig. 3: eine schematische Draufsicht der erfindungsgemäßen Dichtungsanordnung;
- Fig. 4: einen Schnitt längs der Linie II-II in Fig. 1, der die erfindungsgemäße Dichtungsanordnung in einer alternativen Ausgestaltung zeigt.

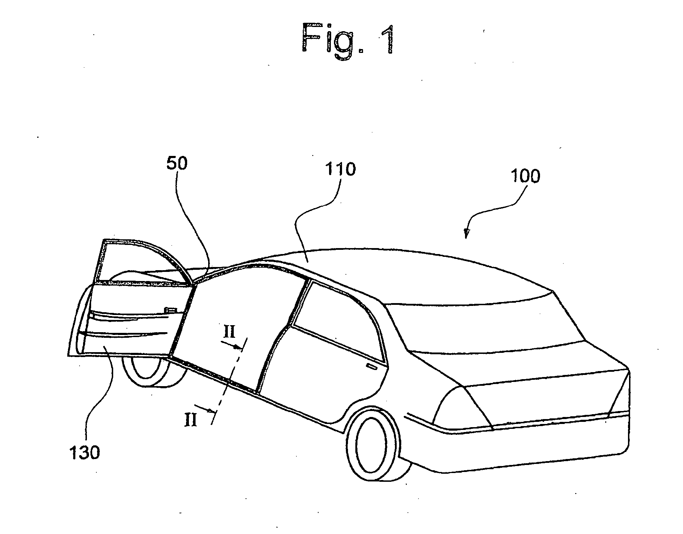

Fig. 1 zeigt eine perspektivische Ansicht eines Kraftfahrzeugs 100, das eine Tür 130 und eine Karosserie 110 aufweist. Die Tür 130 ist mit einer Dichtungsanordnung 50 versehen, die die Tür 130 gegenüber der Karosserie 110 abdichtet.

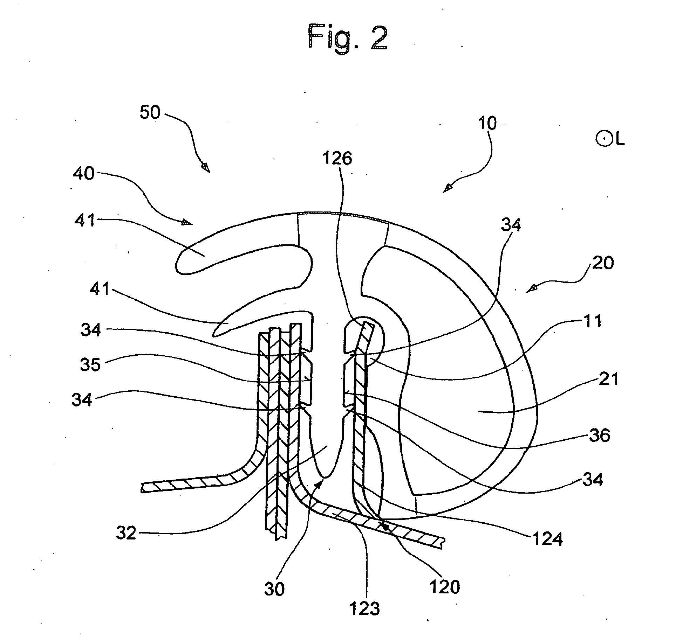

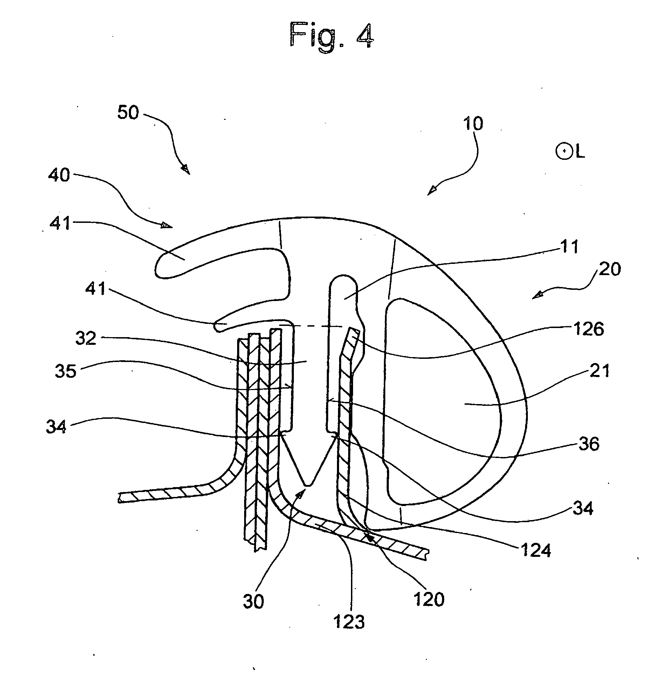

Wie insbesondere die Fig. 2 und 4 zu erkennen geben, weist die erfindungsgemäße Dichtungsanordnung 50 einen ersten Dichtungsabschnitt 20, einen zweiten Dichtungsabschnitt 40 und einen Befestigungsabschnitt 30 auf. Das Kraftfahrzeug 100 weist einen Flansch 120 auf, der aus einem inneren Rahmenteil 123 und einem äußeren Rahmenteil 124 zusammengesetzt ist. Der Flansch 120 ist in Längsrichtung L in Fixierungsbereiche 122, die eine Öffnung 125 aufweisen, und in Stützbereiche 121 unterteilt. Der Befestigungsabschnitt 30 ist in Stützabschnitte 31 und Fixierungsabschnitte 32 unterteilt. Die in Fig. 2 und 4 wiedergegebenen Querschnitte der erfindungsgemäßen Dichtungsanordnung 50, die quer zur Längsrichtung L verlaufen, zeigen einen Schnitt entlang eines Fixierungsabschnittes 32 der Dichtungsanordnung 50. Entlang des Fixierungsabschnitts 32 ist der Befestigungsabschnitt 30 zwischen dem inneren Rahmenteil 123 und dem äußeren Rahmenteil 124 des Flansches 120 angeordnet. So verläuft das äußere Rahmenteil 124 entlang der Außenseite 36 des Befestigungsabschnitts 30, und das innere Rahmenteil 123 verläuft entlang einer Innenseite 35 des Befestigungsabschnitts 30.

Der Dichtungsabschnitt 20 weist eine Hohlkammer 21 auf, die die Tür 130 gegenüber der Karosserie 110 des Kraftfahrzeugs 100 abdichtet. Der Dichtungsabschnitt 20 liegt außenseitig an dem äußeren Rahmenteil 124 an. Das äußere Rahmenteil 124 ist in der Ausnehmung 11 aufgenommen, die zwischen Befestigungsabschnitt 30 und Dichtungsabschnitt 20 angeordnet ist. Der Randbereich 126 des äußeren Rahmenteils 124 ragt im Fixierungsbereich 122 von dem inneren Rahmenteil 123 weg.

Der Dichtungsabschnitt 40 weist zwei Dichtlippen 41 auf, die dafür geeignet sind, an einer Fahrzeugverkleidung anzuliegen und den Flansch 120 gegenüber den Blicken eines Fahrzeuginsassen zu kaschieren.

Der in Fig. 2 gezeigte Fixierungsabschnitt 32 des Befestigungsabschnitts 30 weist vier Haltelippen 34 auf, die das Herausziehen des Fixierungsabschnitts 32 aus dem Fixierungsbereich 122 erschweren. In der alternativen Ausgestaltung der Dichtungsanordnung 50, wie sie in Fig. 4 gezeigt ist, weist der Fixierungsabschnitt 32 des Befestigungsabschnitts 30 der Dichtung 10 zwei Haltelippen 34 auf, die das freie Ende pfeilförmig ausbilden.

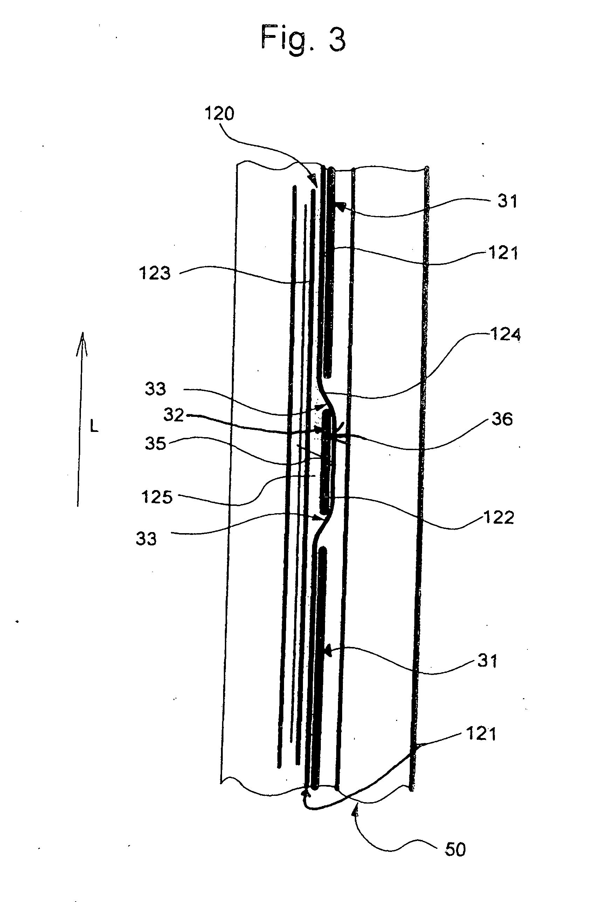

Wie aus der Fig. 3 zu entnehmen ist, sind die Stützabschnitte 31 und die Fixierungsabschnitte 32 des Befestigungsabschnitts 30 in Längsrichtung L hintereinander angeordnet. Ebenso sind die Stützbereiche 121 und die Fixierungsbereiche 122 des Flansches 120 auch in Längsrichtung L hintereinander angeordnet. Weiterhin sind die Stützabschnitte 31 und die Fixierungsabschnitte 32 sowie die Stützbereiche 121 und die Fixierungsbereiche 122 alternierend angeordnet.

Die Stützabschnitte 31 und die Fixierungsabschnitte 32 sind jeweils durch einen Zwischenraum 33 voneinander getrennt. Die Stützbereiche 121 und die Fixierungsbereiche 122 sind durch ein inneres Rahmenteil 123 und ein äußeres Rahmenteil 124 gebildet, wobei das innere Rahmenteil 123 in Längsrichtung L geradlinig verläuft, und das äußere Rahmenteil 124 in Längsrichtung L spundwandförmig verläuft. Wie ebenfalls die Fig. 3 zu erkennen gibt, ist der Fixierungsabschnitt 32 formschlüssig in der Öffnung 125 aufgenommen. Die Öffnung 125 ist vorzugsweise in der Form einer Tasche ausgebildet.

Das äußere Rahmenteil 124 verläuft im Stützbereich 121 auf der Innenseite 35 des Befestigungsabschnitts 30. Zwischen dem Stützbereich 121 und dem Fixierungsbereich 122 verläuft das äußere Rahmenteil 124 durch den Zwischenraum 33 hindurch. Im Fixierungsbereich 122 verläuft das äußere Rahmenteil 124 entlang der Außenseite 36 des Befestigungsabschnitts 30. Das innere Rahmenteil 123 verläuft sowohl am Stützbereich 121 als auch am Fixierungsbereich 122 entlang der Innenseite 35 des Befestigungsabschnitts 30.

Die in den Ausführungsbeispielen wiedergegebene Dichtungsanordnung 50 bietet den Vorteil, dass auf einen Carrier oder eine Armierung der Dichtung verzichtet werden kann. Ebenso kann auf das Kleben durch Klebstoff oder durch ein Klebeband sowie auf das Anheften der Dichtung mittels Klammern oder Clipsen verzichtet werden. Dadurch können sowohl Gewicht als auch Kosten eingespart werden.

### Bezugszeichenliste

- 10: Dichtung
- 11: Ausnehmung

- 20: Dichtungsabschnitt
- 21: Hohlkammer

- 30: Befestigungsabschnitt
- 31: Stützabschnitt
- 32: Fixierungsabschnitt
- 33: Zwischenraum
- 34: Haltelippe
- 35: Innenseite
- 36: Außenseite

- 40: Dichtungsabschnitt
- 41: Dichtlippe

- 50: Dichtungsanordnung

- 100: Kraftfahrzeug

- 110: Karosserie

- 120: Flansch
- 121: Stützbereich
- 122: Fixierungsbereich
- 123: inneres Rahmenteil
- 124: äußeres Rahmenteil

- 125: Öffnung
- 126: Randbereich

- 130: Tür

## Patentansprüche

1. Dichtung für ein Kraftfahrzeug (100), wobei die Dichtung (10) sich in einer Längsrichtung (L) erstreckt und an einem Flansch (120), der ein inneres Rahmenteil (123) und ein äußeres Rahmenteil (124) aufweist, befestigbar ist, umfassend:
wenigstens einen Dichtungsabschnitt (20) und
einen Befestigungsabschnitt (30);
wobei der Befestigungsabschnitt (30) wenigstens einen Stützabschnitt (31), der sich an einem Stützbereich (121) des Flansches (120) abstützt, und wenigstens einen Fixierungsabschnitt (32), der an einem Fixierungsbereich (122) des Flansches (120) befestigbar ist, aufweist,
wobei der Stützabschnitt (31) und der Fixierungsabschnitt (32) in Längsrichtung (L) hintereinander angeordnet sind und annähernd den gleichen Querschnitt aufweisen und
wobei der Fixierungsbereich (122) eine Öffnung (125) aufweist, die durch das innere Rahmenteil (123) und das äußere Rahmenteil (124) gebildet ist, wobei der Fixierungsabschnitt (32) in dem Fixierungsbereich (122) formschlüssig aufgenommen ist.

2. Dichtung nach Anspruch 1, **gekennzeichnet durch** eine Vielzahl an Stützabschnitten (31) und Fixierungsabschnitten (32), die in Längsrichtung (L) alternierend angeordnet sind.

3. Dichtung nach einem der Ansprüche 1 bis 2, **dadurch gekennzeichnet, dass** die Stützabschnitte (31) und/oder die Fixierungsabschnitte (32) in Längsrichtung (L) durch einen Zwischenraum (33) voneinander getrennt sind.

4. Dichtung nach einem der Ansprüche 1 bis 3, **gekennzeichnet durch** einen ersten Dichtungsabschnitt (20), der wenigstens eine Hohlkammer (21) aufweist und der geeignet ist, die Karosserie (110) gegenüber einer Tür (130) abzudichten.

5. Dichtung nach einem der Ansprüche 1 bis 4, **gekennzeichnet durch** einen zweiten Dichtungsabschnitt (40), der wenigstens eine Dichtlippe (41) aufweist und vorzugsweise zum Abdichten der Karosserie (110) gegenüber einer Fahrzeuginnenverkleidung (140) dient.

6. Dichtung nach einem der Ansprüche 1 bis 5, **gekennzeichnet durch** eine Ausnehmung (11), die abschnittsweise zur Aufnahme des inneren Rahmenteils (123) oder des äußeren Rahmenteils (124) dient und zwischen Befestigungsabschnitt (30) und Dichtungsabschnitt (20) angeordnet ist.

7. Dichtung nach einem der Ansprüche 1 bis 6, **dadurch gekennzeichnet, dass** der Fixierungsabschnitt (32) wenigstens eine Haltelippe (34) aufweist, die dafür geeignet ist den Fixierungsabschnitt (32) in der Öffnung (125) zu halten.

8. Dichtungsanordnung für ein Kraftfahrzeug (100), insbesondere zum Abdichten einer Karosserie (110), umfassend:
eine sich in Längsrichtung (L) erstreckende Dichtung (10) nach einem der Ansprüche 1 bis 7 und
einen Flansch (120) mit einem inneren Rahmenteil (123) und einem äußeren Rahmenteil (124);
wobei der Flansch (120) wenigstens einen Stützbereich (121) zur Aufnahme des Stützabschnitts (31) und wenigstens einen Fixierungsbereich (122) zur Aufnahme des Fixierungsabschnitts (32) aufweist;
wobei der Stützbereich (121) und der Fixierungsbereich (122) in Längsrichtung (L) hintereinander angeordnet sind und
wobei der Fixierungsbereich (122) eine Öffnung (125) aufweist, die durch das innere Rahmenteil (123) und das äußere Rahmenteil (124) gebildet ist, wobei der Fixierungsabschnitt (32) in dem Fixierungsbereich (122) formschlüssig aufgenommen ist.

9. Dichtungsanordnung nach Anspruch 8, **gekennzeichnet durch** eine Vielzahl an Stützbereichen (121) und Fixierungsbereichen (122), die in Längsrichtung (L) alternierend angeordnet sind.

10. Dichtungsanordnung nach Ansprüch 8 oder 9, **dadurch gekennzeichnet, dass** der Befestigungsabschnitt (30) eine Innenseite (35) und eine Außenseite (36) aufweist, wobei entlang des Stützbereichs (121) das innere Rahmenteil (123) und das äußere Rahmenteil (124) an der Innenseite (35) verlaufen, und vorzugsweise entlang des Fixierungsbereichs (122) das innere Rahmenteil (123) an der Innenseite (35) und das äußere Rahmenteil (124) an der Außenseite (36) verläuft.

11. Dichtungsanordnung nach einem der Ansprüche 8 bis 10, **dadurch gekennzeichnet, dass** das äußere Rahmenteil (124) wenigstens durch einen Zwischenraum (33) hindurch verläuft.

12. Dichtungsanordnung nach einem der Ansprüche 8 bis 11, **dadurch gekennzeichnet, dass** das innere Rahmenteil (123) in Längsrichtung (L) im Wesentlichen geradlinig verläuft und vorzugsweise das äußere Rahmenteil (124) in Längsrichtung (L) im Wesentlichen spundwandförmig verläuft.

13. Dichtungsanordnung nach einem der Ansprüche 8 bis 12, **dadurch gekennzeichnet, dass** das innere Rahmenteil (123) und das äußere Rahmenteil (124) abschnittsweise parallel zueinander in Längsrichtung (L) verlaufen.

14. Dichtungsanordnung nach einem der Ansprüche 8 bis 13, **dadurch gekennzeichnet, dass** das äußere Rahmenteil (124) einen Randbereich (126) aufweist, der zumindest im Fixierungsbereich (122) vom inneren Rahmenteil (123) wegragt und vorzugsweise in der Ausnehmung (11) aufgenommen ist.

## Claims

1. Seal for a motor vehicle (100), with the seal (10) extending along a longitudinal direction (L) and being adapted for fastening on a flange (120) including an inner frame part (123) and an outer frame part (124), comprising:
at least one sealing section (20) and
one fastening section (30);
wherein said fastening section (30) supports at least one supporting section (31) that is supported on a supporting region (121) of said flange (120), and at least one locating section (32) that is adapted to be fastened on a locating region (122) of said flange (120);
wherein said supporting section (31) and said locating section (32) being arranged in succession in a longitudinal direction (L) and presenting approximately the same cross section, and
wherein said locating region (122) including an opening (125) that is defined by said inner frame part (123) and said outer frame part (124), wherein said locating section (32) being accommodated in said locating region (122) in a form-locking manner.

2. Seal according to Claim 1, **characterised by** a plurality of supporting sections (31) and locating sections (32), which are arranged in alternation along said longitudinal direction (L).

3. Seal according to any of the Claims 1 to 2, **characterised in that** said supporting sections (31) and/or said locating sections (32) are separated from each other by a gap (33) along said longitudinal direction (L).

4. Seal according to any of the Claims 1 to 3, **characterised by** a first sealing section (20) that includes at least one hollow chamber (21) and that is adapted for sealing the vehicle body (110) against a door (130).

5. Seal according to any of the Claims 1 to 4, **characterised by** a second sealing section (40) that is provided with at least one sealing lip (41) and that serves preferably for sealing the vehicle body (110) against an inner vehicle panelling (140).

6. Seal according to any of the Claims 1 to 5, **characterised by** a recess (11) that serves to accommodate, section by section, said inner frame part (123) or said outer frame part (124) and that is disposed between said fastening section (30) and said sealing section (20).

7. Seal according to any of the Claims 1 to 6, **characterised in that** said locating section (32) comprises at least one retaining lip (34) that is adapted for holding said locating section (32) in said opening (125).

8. Seal assembly for a motor vehicle (100), in particular for sealing a vehicle body (110), comprising:
a seal (10) extending along the longitudinal direction (L) in accordance with any of the Claims 1 to 7, and
a flange (120) provided with an inner frame part (123) and an outer frame part (124);
wherein said flange (120) is provided with at least one supporting region (121) for accommodation of said supporting section (31) and at least one locating region (122) for accommodation of said locating section (32);
wherein said supporting region (121) and said locating region (122) being arranged in succession in a longitudinal direction (L), and
wherein said locating region (122) including an opening (125) that is defined by said inner frame part (123) and said outer frame part (124), wherein said locating section (32) being accommodated in said locating region (122) in a form-locking manner.

9. Seal assembly according to Claim 8, **characterised by** a plurality of supporting regions (121) and locating regions (122), which are arranged in alternation along said longitudinal direction (L).

10. Seal assembly according to Claim 8 or 9, **characterised in that** said fastening section (30) presents an inside (35) and an outside (36), wherein said inner frame part (123) and said outer frame part (124) extending on said inside (35) along said supporting region (121), and preferably said inner frame part (123) extending on said inside (35) and said outer frame part (124) extending on said outside (36) along said locating region (122).

11. Seal assembly according to any of the Claims 8 to 10, **characterised in that** said outer frame part (124) extends through at least one gap (33).

12. Seal assembly according to any of the Claims 8 to 11, **characterised in that** said inner frame part (123) extends in a substantially rectilinear form along said longitudinal direction (L) and that preferably said outer frame part (124) extends essentially in the form of a sheet piling along said longitudinal direction (L).

13. Seal assembly according to any of the Claims 8 to 12, **characterised in that** said inner frame part (123) and said outer frame part (124) extend, section by section, in parallel relationship along said longitudinal direction (L).

14. Seal assembly according to any of the Claims 8 to 13, **characterised in that** said outer frame part (124) is provided with a peripheral region (126) that projects from said inner frame part (123) at least in said locating region (122) and is preferably accommodated in said recess (11).

## Revendications

1. Joint pour un véhicule automobile (100), ledit joint (10) s'étendant dans une direction longitudinale (L) et étant susceptible d'être fixé à une bride (120) qui comporte une partie de cadre intérieure (123) et une partie de cadre extérieure (124), comprenant :
au moins une portion formant joint (20) et
une portion d'immobilisation (30) ;
dans lequel la portion d'immobilisation (30) comprend au moins une portion de soutien (31) qui est soutenue sur une zone de soutien (121) de la bride (120), et au moins une portion de fixation (32), qui est susceptible d'être fixée à une zone de fixation (122) de la bride (120) ;
dans lequel la portion de soutien (31) et la portion de fixation (32) sont agencées l'une derrière l'autre en direction longitudinale (L) et présentent approximativement la même section transversale ;
dans lequel la zone de fixation (122) comporte une ouverture (125) qui est formée à travers la partie de cadre intérieure (123) et la partie de cadre extérieure (124), et la portion de fixation (32) est reçue à coopération de formes dans la zone de fixation (122).

2. Joint selon la revendication 1, **caractérisé par** une pluralité de portions de soutien (31) et de portions de fixation (32), qui sont agencées en alternance en direction longitudinale (L).

3. Joint selon l'une des revendications 1 et 2, **caractérisé en ce que** les portions de soutien (31) et/ou les portions de fixation (32) sont séparées les unes des autres par un intervalle (32) en direction longitudinale (L).

4. Joint selon l'une des revendications 1 à 3, **caractérisé par** une première portion formant joint (20), qui comporte au moins une cavité (21), et qui convient pour étancher la carrosserie (110) par rapport à une porte (130).

5. Joint selon l'une des revendications 1 à 4, **caractérisé par** une seconde portion formant joint (40), qui comporte au moins une lèvre d'étanchéité (41) et qui sert de préférence à étancher la carrosserie (110) par rapport à un habillage intérieur (140) du véhicule.

6. Joint selon l'une des revendications 1 à 5, **caractérisé par** un évidement (11) qui sert par portion à recevoir la partie de cadre intérieure (123) ou la partie de cadre extérieure (124), et qui est agencé entre la portion d'immobilisation (30) et la portion formant joint (20).

7. Joint selon l'une des revendications 1 à 6, **caractérisé en ce que** la portion de fixation (32) comprend au moins une lèvre de maintien (34), qui convient pour maintenir la portion de fixation (32) dans l'ouverture (125).

8. Agencement de joint pour un véhicule automobile (100), en particulier pour étancher une carrosserie (110), comprenant :
un joint (10) selon l'une des revendications 1 à 7, s'étendant en direction longitudinale (L), et
une bride (120) avec une partie de cadre intérieure (123) et une partie de cadre extérieure (124) ;
dans lequel la bride (120) comprend au moins une zone de soutien (121) pour recevoir la portion de soutien (31) et au moins une zone de fixation (122) pour recevoir la portion de fixation (32) ;
dans lequel la zone de soutien (121) et la zone de fixation (122) sont agencées l'une derrière l'autre en direction longitudinale (L), et
dans lequel la zone de fixation (122) comporte une ouverture (125), qui est formée par la partie de cadre intérieure (123) et la partie de cadre extérieure (124), et la portion de fixation (32) est reçue à coopération de formes dans la zone de fixation (122).

9. Agencement de joint selon la revendication 8, **caractérisé par** une pluralité de zones de soutien (121) et de zones de fixation (122), qui sont agencées en alternance en direction longitudinale (L).

10. Agencement de joint selon la revendication 8 ou 9, **caractérisé en ce que** la portion d'immobilisation (30) comporte un côté intérieur (35) et un côté extérieur (36), tels que le long de la zone de soutien (121) la partie de cadre intérieure (123) et la partie de cadre extérieure (124) s'étendent contre le côté intérieur (35), et de préférence le long de la zone de fixation (122) la partie de cadre intérieure (123) s'étend contre le côté intérieur (35) et la partie de cadre extérieure (124) s'étend contre le côté extérieur (36).

11. Agencement de joint selon l'une des revendications 8 à 10, **caractérisé en ce que** la partie de cadre extérieure (124) s'étend au moins à travers un intervalle (33).

12. Agencement de joint selon l'une des revendications 8 à 11, **caractérisé en ce que** la partie de cadre intérieure (123) s'étend sensiblement en ligne droite en direction longitudinale (L), et de préférence la partie de cadre extérieure (124) s'étend sensiblement en formant un batardeau en direction longitudinale (L).

13. Agencement de joint selon l'une des revendications 8 à 12, **caractérisé en ce que** la partie de cadre intérieure (123) et la partie de cadre extérieure (124) s'étendent par portion parallèlement l'une à l'autre en direction longitudinale (L).

14. Agencement de joint selon l'une des revendications 8 à 13, **caractérisé en ce que** la partie de cadre extérieure (124) comporte une zone de bordure (126) qui dépasse de la partie de cadre intérieure (123) au moins dans la zone de fixation (122) et qui est de préférence reçue dans l'évidement (11).
